# FASCICULE DE BREVET EUROPEEN

(11) **EP 3 775 626 B1**
(45) Date de publication et mention de la délivrance du brevet: **19.03.2025**
(21) Numéro de dépôt: 19717128.3
(22) Date de dépôt: 20.03.2019
(51) Int. Cl.: F16H 63/34, F16H 63/36

(54) **SYSTEME DE COMMANDE DE VERROU DE PARKING**
KONTROLLSYSTEM FÜR PARKSPERRE
PARKING LOCK CONTROL SYSTEM

(30) Priorité: 10.04.2018 FR 1853100
(43) Date de publication de la demande: 17.02.2021
(73) Titulaire: Stellantis Auto SAS, 78300 Poissy (FR)
(72) Inventeur: RENAULT, Aurélien, 78760 Jouars Pontchartrain (FR); TREMEAU, Benoit, 91300 Massy (FR)
(74) Mandataire: PSIP
(86) Numéro de dépôt international: PCT/FR2019/050628
(87) Numéro de publication internationale: WO 2019/197742

(56) Documents cités:
- EP-A1- 2 927 540
- WO-A1-2018/192989
- DE-A1- 102010 043 257
- US-A1- 2014 110 216

## Description

L'invention s'inscrit dans le domaine des commandes de boîte de vitesses pour véhicule automobile, et plus précisément dans le domaine de la commande de verrou de parking qui peut être commandée électriquement et associée à une boîte de vitesses, notamment une boîte de vitesses automatique.

On connait des commandes de verrou de parking par câble mécanique actionné par le levier d'une boîte de vitesses automatique, dans l'habitacle.

Mais les boîtes de vitesses sont de plus en plus électrifiées, et automatiques, et les commandes mécaniques sont supplantées par des commandes électriques (« by wire »).

Le système d'actionnement du verrou de parking doit comporter au moins une position stable, c'est-à-dire qui ne nécessite pas d'énergie électrique pour perdurer dans le temps. Des systèmes à une unique position stable sont connus (systèmes monostables) et des systèmes à deux positions stables sont également connus (systèmes bistables).

L'invention est une évolution d'un système monostable, qui dans son fonctionnement nominal, selon l'art antérieur, présente une position par défaut dans laquelle le verrou de parking est engagé et maintenu. Cette position par défaut est celle atteinte en l'absence d'alimentation en énergie du système d'actionnement.

On est confronté à une difficulté de maniement du véhicule lors de la livraison de la boîte de vitesses en usine d'assemblage terminal. Il est à ce moment nécessaire de déplacer le véhicule, mais la boîte de vitesses et le système d'actionnement du verrou de parking ne sont pas alimentés en énergie. Il est connu d'accéder manuellement à la commande verrou de parking, ce qui est fastidieux, et nécessite qu'un chemin d'accès et une prise manuelle aient été prévus. Un outil peut de plus être oublié dans le véhicule. La ligne de production est interrompue à chaque difficulté.

Le problème se pose aussi dans diverses autres situations de vie, notamment des réparations ou des révisions.

Le document DE102014104575_A1 divulgue un verrou de parking avec des organes de couplage et d'actionnement mobiles en translation, avec des directions de couplage et d'actionnement qui sont transversales l'une à l'autre.

Le document DE-A1-102010043257 divulgue un système de commande de verrou de parking pour véhicule à boîte de vitesses automatique, selon le préambule de la revendication 1.

Le document WO-A1-2018192989, qui constitue l'état de la technique selon l'article 54(3) CBE, divulgue un système de commande de verrou de parking pour véhicule à boîte de vitesses automatique.

Pour résoudre les problèmes évoqués ci-dessus, il est proposé un système de commande de verrou comprenant un premier actionneur en mouvement entre un premier état stable dans lequel un système de verrou est mis en œuvre, le premier état stable étant un état qui ne nécessite pas d'énergie électrique ou hydraulique pour perdurer dans le temps, et une première position désengagée dans laquelle le système de verrou est désactivé, et un deuxième actionneur en mouvement entre une position de repos dans laquelle le deuxième actionneur n'interagit pas avec le premier actionneur, et une position active dans laquelle le deuxième actionneur est contraint contre le premier actionneur, le premier actionneur comprenant une première prise pour une tête du deuxième actionneur qui quand ce deuxième actionneur est en position active et que sa mise en œuvre est maintenue bloque le premier actionneur dans la première position désengagée, le premier actionneur comprenant une tige entre une tête pour l'actionnement du système de verrou et un vérin pour le déplacement de la tige et de la tête.

Le système est remarquable car le premier actionneur comprend de plus une deuxième prise, conformée conjointement, avec la tête du deuxième actionneur, pour interagir avec celle-ci en sorte de bloquer le premier actionneur dans un deuxième état stable dans lequel le système de verrou est désactivé, le deuxième état stable étant un état qui ne nécessite pas d'énergie électrique ou hydraulique pour perdurer dans le temps, les première et deuxième prises étant sous la forme de deux encoches ménagées à deux hauteurs distinctes de la tige.

Cela permet de disposer d'un état stable du verrou de parking, ne nécessitant pas d'apport en énergie, et dans lequel le verrou de parking est désengagé.

De manière optionnelle et avantageuse, le système peut présenter les caractéristiques suivantes :
- le premier actionneur est en mouvement de translation dans une première direction entre le premier état stable et la première position désengagée ;
- le deuxième actionneur est en mouvement de translation dans une deuxième direction entre la position de repos et la position active ;
- le deuxième état stable est atteint par une course du premier actionneur à partir de la position engagée plus longue que celle nécessaire pour atteindre la première position désengagée ;
- le premier et le deuxième actionneurs sont rappelés respectivement dans leur premier état stable et leur position de repos par des ressorts ;
- le premier et le deuxième actionneurs sont à mise en œuvre électrique ou hydraulique.

L'invention offre aussi un verrou de parking pour véhicule automobile à boîte de vitesses automatique comprenant un système de commande tel qu'évoqué ci-dessus.

L'invention offre aussi un véhicule automobile à boîte de vitesses automatique comprenant un tel verrou de parking.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue du système dans une position d'engagement du frein de parking ;
- la figure 2 est une vue du système dans une position de déverrouillage du frein de parking avec apport d'électricité aux actionneurs ;
- la figure 3 est une vue du système dans une position stable originale de déverrouillage du frein de parking sans apport d'électricité aux actionneurs ;
- la figure 4 est une vue schématique des états du système.

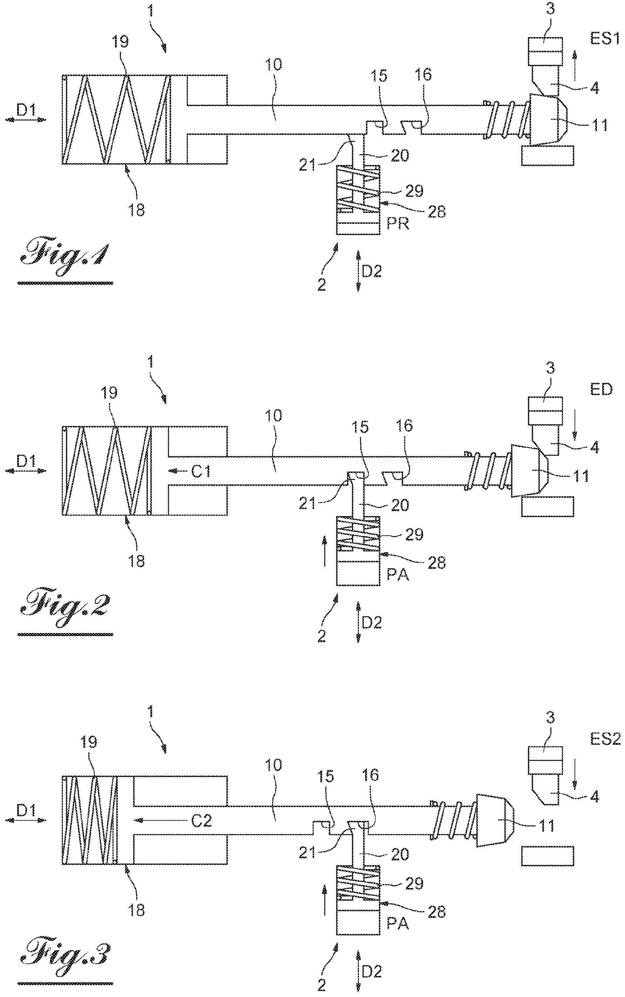

En figure 1 on a représenté un système de commande de verrou de parking selon l'invention, dans une première position.

Ce système de commande comprend un premier actionneur 1 en mouvement de translation suivant une direction D1, et un deuxième actionneur 2 également en mouvement de translation suivant une direction D2.

Ces deux actionneurs sont des actionneurs électriques (ou hydrauliques), et leurs mouvements de translation se font transversalement l'un à l'autre, et plus précisément perpendiculairement l'un à l'autre.

Ils comportent tous les deux des tiges de commande dirigées selon la direction de translation. La tige de commande du premier actionneur 1 est référencée 10 et la tige de commande du deuxième actionneur 2 est référencée 20. Chacune de ces tiges comporte une tête, à son extrémité libre. La tête de la tige 10 de l'actionneur 1 est référencée 11 et a une fonction d'actionnement du frein de parking, et la tête de la tige 20 de l'actionneur 2 est référencée 21 et a une fonction d'interaction avec la tige 10 pour son blocage.

L'actionneur 1 comprend de plus un vérin 18 avec des moyens de rappel qui sont constitués par un ressort 19.

L'actionneur 2 comprend un vérin 28 avec des moyens de rappel constitués par un ressort 29.

Les vérins sont des vérins hydrauliques ou des vérins à solénoïde (électromagnétiques).

Le système de commande comprend un doigt 4, ayant une structure d'une came sur laquelle la tête 11 appuie pour le faire se mouvoir en translation dans un sens perpendiculaire à la direction de translation de la tige 10 du premier actionneur 1.

Le doigt 4 de par son mouvement de translation verrouille ou libère le verrou de parking 3.

Dans la position du système de commande représenté en figure 1, chacun des deux actionneurs 1 et 2 n'est pas alimenté en énergie, et adopte donc sa position de repos, définie par les moyens de rappel, élastiques, de type ressort, dont ils sont munis. Le premier actionneur 1 est en position stable, ou premier état stable ES1. Le deuxième actionneur 2 est en position de repos PR.

Il ressort de cette situation que le premier actionneur 1 est déplacé en direction du doigt 4, ce qui correspond à sa position de repos, que l'actionneur 2 est déplacé pour s'éloigner de l'actionneur 1 et plus précisément de sa tige 10, ce qui correspond à sa position de repos.

Par conséquent, l'actionneur 2 n'influe aucunement sur la position de l'actionneur 1, qui est libre, et qui pousse le doigt 4, ayant pour conséquence le verrouillage du verrou de parking 3 et l'immobilisation du véhicule à l'arrêt, qui peut ainsi rester stationné longtemps sans consommation d'énergie électrique (ou hydraulique en fonction du type d'actionneur) pour l'actionneur 1. L'énergie de rappel du ressort 19 est suffisante pour l'engagement et le maintien du verrou de parking.

En figure 2, à la demande de l'utilisateur du véhicule automobile le premier actionneur 1 et le deuxième actionneur 2 sont tous les deux alimentés en énergie et se déplacent, respectivement pour l'actionneur 1 en s'écartant du doigt 4, vers la gauche de la figure, suivant une course C1, et pour l'actionneur 2 en se rapprochant de la tige 10 de l'actionneur 1, vers le haut de la figure. Le deuxième actionneur 2 est contraint contre le premier actionneur 1.

Une première conséquence de ces mouvements est que le frein de parking 3 est désactivé (l'actionneur 1 est dans un état ou une position désengagé ED), et que le véhicule peut être mis en mouvement pour circuler sur route, propulsé par son groupe motopropulseur et dirigé par le conducteur.

Une deuxième conséquence de ces mouvements est que la tête 21 de la tige 20 de l'actionneur 2 entre dans une prise 15 sous la forme d'une encoche ménagée sur la surface de la tige 10 du côté faisant face à l'actionneur 2. Celui-ci atteint une position active PA.

L'insertion de la tête 21 dans la prise 15 a pour effet de bloquer le mouvement de la tige 10 de l'actionneur 1. Ce blocage est un effet de sécurisation de la désactivation du frein de parking. En effet, en cas de défaillance du circuit d'excitation du premier actionneur 1, le deuxième actionneur 2 maintiendrait le premier actionneur 1 en position.

Par contre, dans l'hypothèse où l'alimentation en énergie des deux actionneurs 1 et 2 est coupée, par exemple pour mise en stationnement, la tête 21 de l'actionneur 2, sous l'effet du ressort 29, se retire de la prise 15 qui ne lui oppose pas de résistance et l'actionneur 1 est alors libre de retourner dans la position de la figure 1, ce qu'il fait spontanément par l'effet du ressort 19, engageant alors le frein de parking 3.

En figure 3, on a représenté le système de commande de verrou de parking présenté aux figures précédentes dans une position verrouillée originale permettant la désactivation des actionneurs.

L'actionneur 1 a suivi par rapport à la position dans laquelle il est représenté aux figures 1 et 2 une translation vers la gauche l'amenant dans une position encore plus écartée du doigt 4 que celle représentée en figure 2. La course est une course C2 depuis la position de la figure 1, avec C2 > C1.

Après que l'actionneur 1 ait suivi cette course et atteint ainsi une position intermédiaire PI1, l'actionneur 2 est alimenté en énergie pour que sa tête 21 s'insère dans une prise de la tige 10 de l'actionneur 1. Il atteint sa position active PA, déjà décrite en lien avec la figure 2.

Compte tenu de la course supplémentaire effectuée par l'actionneur 1 en sorte que celui-ci s'écarte du doigt de parking 4, la tête 21 est insérée dans une prise 16 de la surface latérale de la tige 10 située entre la prise 15 et la tête 11, du côté de l'actionneur 2 et ayant la forme d'une encoche.

La particularité de la prise 16, par rapport à la prise 15 est qu'elle est conformée, conjointement avec la tête 21 pour qu'en cas de suppression de l'alimentation d'énergie de l'actionneur 1 et de l'actionneur 2, on obtienne un effet nouveau.

Pour mémoire, en cas de suppression de l'alimentation d"énergie des deux actionneurs, l'actionneur 1 est repoussé par ses moyens de rappel (ressort 19) vers le doigt 4, et l'actionneur 2 est rappelé par ses moyens de rappel (ressort 29) en sorte de s'écarter de la tige 10.

L'effet nouveau est que la prise 16 retient la tête 21, ce qui n'est pas le cas avec la prise 15 dans la configuration de la figure 2. Les deux actionneurs se maintiennent l'un l'autre dans les positions de la figure 3, à savoir l'état stable ES2 et la position active PA.

Ainsi, il est aisé dans certaines situations de mettre le verrou de parking dans une configuration spécifique avec le verrou de parking désengagé restant dans cette position de manière stable sans apport d'énergie.

Cette particularité peut être utilisée pour certaines opérations de maintenance ainsi que lors de la livraison de la boîte de vitesses en usine d'assemblage de véhicule.

Pour s'assurer du bon fonctionnement du système, il est préférable une fois la position décrite en figure 3 atteinte avec les actionneurs alimentés en énergie (position PI1), de d'abord, couper l'alimentation de l'actionneur 1, en sorte que la prise 16 soit bien engagée avec la tête 21 grâce aux moyens de rappel de l'actionneur 1, puis de seulement dans un deuxième temps couper l'alimentation en énergie de l'actionneur 2, cette suppression de l'alimentation de l'actionneur 2 n'ayant pas de conséquence puisque la tête 21 est retenue par la prise 16. On atteint la deuxième position stable ES2.

On précise que pour quitter cette position spécifique et revenir en mode nominal tel que représenté par les figures 1 et 2, la solution est de réalimenter en énergie les actionneurs 1 et 2 (ou seulement l'actionneur 1), cela permettant de libérer la tige 20 de l'actionneur 2, plus précisément sa tête 21 qui quitte la prise 16 et son engagement avec celle-ci en sorte que l'actionneur 2 puisse revenir par lui-même en position de repos, grâce à ses moyens de rappel. On atteint ainsi une position intermédiaire PI2. Une fois cela fait, le retour complet en position nominale déverrouillée (état ES1) se fait en coupant l'alimentation de l'actionneur 1.

Ainsi, on a utilisé une course supplémentaire C2 de l'actionneur 1, qui est utilisée uniquement dans certaines conditions, et un système de blocage supplémentaire défini par la prise 16 pour bloquer l'actionneur 1 avec la commande en position désengagée, ou deuxième état stable ES2.

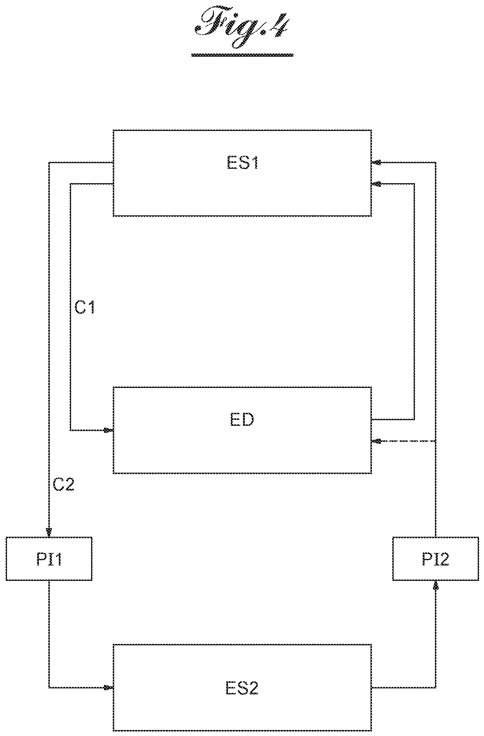

En figure 4 on a représenté les évolutions du système.

Les positions nominales de celui-ci sont représentées par ES1 (état stable n°1, représentée en figure 1, et dans lequel le verrou est mis en place) et ED (état désengagé, représenté en figure 2, dans lequel les actionneurs sont maintenus alimentés en énergie). La course de l'actionneur 1 entre ES1 et ED est une distance C1, parallèlement à la tige 10, sous l'effet de l'actionnement des deux actionneurs 1 et 2. Le passage de ES1 vers ED est naturellement réversible par un mouvement inverse, provoqué par les moyens de rappel des actionneurs 1 et 2, après l'arrêt de l'actionnement électrique (ou hydraulique) des actionneurs 1 et 2.

À partir de l'état ES1, une course C2 de l'actionneur 1, sous l'effet de l'actionnement de l'actionneur 1, parallèlement à la tige 10 et plus longue que la course C1 permet d'atteindre une position intermédiaire PI1, à partir de laquelle l'actionnement de l'actionneur 2 permet d'atteindre un état stable ES2, dans lequel les alimentations en énergie des deux actionneurs peuvent être interrompues, en commençant par celle de l'actionneur 1.

Ensuite, en rétablissant l'alimentation en énergie de l'actionneur 1, il est possible d'atteindre une position intermédiaire PI2, à partir de laquelle l'interruption de l'alimentation de l'actionneur 1 permet de retourner dans l'état stable ES1, correspondant à la position de verrouillage.

Il est ainsi possible de mettre en place une boîte de vitesses qui dans des conditions particulières peut avoir un mode de fonctionnement stable avec un système immobile malgré l'absence d'apport d'énergie (état ES2), que l'on peut bien sur ramener aisément vers un fonctionnement classique avec engagement automatique du verrou de parking en cas de coupure d'énergie (état ES1) comme c'est le cas à partir de la configuration de la figure 2. Éventuellement, il est possible de passer de ES2 à ED, de manière contrôlée.

L'invention permet donc sans qu'il soit nécessaire d'ajouter des composants supplémentaires de répondre aux besoins correspondant aux situations de vie rencontrées sans nécessiter d'actions manuelles particulières de l'utilisateur.

De manière tout à fait remarquable, la solution permet la livraison d'une boîte de vitesses automatique déverrouillée en état ES2. Elle ne nécessite pas d'outil de maintien pour ce faire. Elle permet aussi, pendant la vie du véhicule et par exemple pour une opération de maintenance, de remettre la boîte de vitesses en position déverrouillée, comme pour le mode livraison, tout en supprimant l'alimentation en énergie des actionneurs.

## Revendications

1. Système de commande de verrou comprenant un premier actionneur (1) en mouvement entre un premier état stable (ES1) dans lequel un système de verrou (3) est mis en œuvre, le premier état stable (ES1) étant un état qui ne nécessite pas d'énergie électrique ou hydraulique pour perdurer dans le temps, et une première position désengagée (ED) dans laquelle le système de verrou (3) est désactivé, et un deuxième actionneur (2) en mouvement entre une position de repos (PR) dans laquelle le deuxième actionneur (2) n'interagit pas avec le premier actionneur (1), et une position active (PA) dans laquelle le deuxième actionneur (2) est contraint contre le premier actionneur (1), le premier actionneur (1) comprenant une première prise (15) pour une tête du deuxième actionneur (21) qui quand ce deuxième actionneur (2) est en position active (PA) et que sa mise en œuvre est maintenue bloque le premier actionneur (1) dans la première position désengagée (ED), le premier actionneur (1) comprenant une tige (10) entre une tête (11) pour l'actionnement du système de verrou (3) et un vérin (18) pour le déplacement de la tige (10) et de la tête (11), **caractérisé en ce que** le premier actionneur (1) comprend de plus une deuxième prise (16), conformée, conjointement avec la tête du deuxième actionneur (2), pour interagir avec celle-ci en sorte de bloquer le premier actionneur (1) dans un deuxième état stable (ES2) dans lequel le système de verrou (3) est désactivé, le deuxième état stable (ES2) étant un état qui ne nécessite pas d'énergie électrique ou hydraulique pour perdurer dans le temps, les première et deuxième prises (15, 16) étant sous la forme de deux encoches ménagées à deux hauteurs distinctes de la tige (10).

2. Système de commande de verrou selon la revendication 1, **caractérisé en ce que** le premier actionneur (1) est en mouvement de translation dans une première direction (D1) entre le premier état stable (ES1) et la première position désengagée (ED).

3. Système de commande de verrou selon la revendication 1 ou la revendication 2, **caractérisé en ce que** le deuxième actionneur (2) est en mouvement de translation dans une deuxième direction (D2) entre la position de repos (PR) et la position active (PA).

4. Système de commande de verrou selon l'une des revendications 1 à 3, **caractérisé en ce que** le deuxième état stable (ES2) est atteint par une course (C2) du premier actionneur à partir de la position engagée (ES1) plus longue que celle nécessaire (C1) pour atteindre la première position désengagée (ED).

5. Système de commande de verrou selon l'une des revendications 1 à 4, **caractérisé en ce que** le premier et le deuxième actionneurs (1, 2) sont rappelés respectivement dans leur premier état stable (ES1) et leur position de repos (PR) par des ressorts (19, 29).

6. Système de commande de verrou selon l'une des revendications 1 à 5, **caractérisé en ce que** le premier et le deuxième actionneurs sont à mise en œuvre électrique ou hydraulique.

7. Verrou de parking pour véhicule automobile à boîte de vitesses automatique **caractérisé en ce qu'**il comprend un système de commande selon l'une des revendications 1 à 6.

8. Véhicule automobile à boîte de vitesses automatique **caractérisé en ce qu'**il comprend un verrou de parking selon la revendication 7.

## Patentansprüche

1. Schleusensteuersystem mit einem ersten Aktuator (1), der sich zwischen einem ersten stabilen Zustand (ES1) bewegt, in dem ein Schleusensystem (3) betrieben wird, wobei der erste stabile Zustand (ES1) ein Zustand ist, der keinen Bedarf hat von elektrischer oder hydraulischer Energie , die über einen längeren Zeitraum anhält, und einer ersten ausgerückten Position (ED), in der das Verriegelungssystem (3) deaktiviert ist, und einem zweiten Aktuator (2), der sich zwischen einer Ruheposition (PR) bewegt, in der sich das zweite befindet Aktor (2) nicht mit dem ersten Aktor (1) interagiert, und eine aktive Position (PA), in der der zweite Aktor (2) gezwungen wird der erste Aktuator (1), wobei der erste Aktuator (1) eine erste Buchse (15) für einen Kopf des zweiten Aktuators (21) umfasst, der, wenn sich dieser zweite Aktuator (2) in der aktiven Position (PA) befindet, seine Aktivierungsarbeit leistet gehalten wird, blockiert den ersten Aktuator (1) in der ersten ausgerückten Position (ED), wobei der erste Aktuator (1) eine Stange (10) zwischen einem Kopf (11) zur Betätigung des Systems umfasst Schloss (3) und einen Zylinder (18) zum Bewegen der Stange (10) und des Kopfes (11), **dadurch gekennzeichnet, dass** der erste Aktuator (1) außerdem eine zweite Buchse (16) umfasst, die gemeinsam mit dem Kopf des Zylinders (16) geformt ist zweiten Aktuator (2), um mit diesem zusammenzuwirken, um den ersten Aktuator (1) in einem zweiten stabilen Zustand (ES2) zu blockieren, in dem das Verriegelungssystem (3) deaktiviert ist, dem zweiten Zustand stabil (ES2) ist ein Zustand , für dessen Aufrechterhaltung keine elektrische oder hydraulische Energie erforderlich ist, wobei die ersten und zweiten Fassungen (15, 16) die Form von zwei Kerben haben, die auf zwei unterschiedlichen Höhen der Stange (10) vorgesehen sind.

2. Schleusensteuerungssystem nach Anspruch 1, **dadurch gekennzeichnet, dass** sich der erste Aktuator (1) in einer translatorischen Bewegung in einer ersten Richtung befindet (D1) zwischen dem ersten stabilen Zustand (ES1) und der ersten ausgerückten Position (ED).

3. Schleusensteuerungssystem nach Anspruch 1 oder Anspruch 2, **dadurch gekennzeichnet, dass** sich der zweite Aktuator (2) in einer translatorischen Bewegung in einer zweiten Richtung (D2) zwischen der Ruheposition (PR) und der aktiven Position (PA) befindet.

4. Schleusensteuerungssystem nach einem der Ansprüche 1 bis 3, **dadurch gekennzeichnet dass** der zweite stabile Zustand (ES2) durch einen Hub (C2) des ersten erreicht wird Stellantrieb aus der eingekuppelten Position (ES1) länger als nötig (C1), um die erste ausgekuppelte Position (ED) zu erreichen.

5. Schleusensteuerungssystem nach einem der Ansprüche 1 bis 4, **dadurch gekennzeichnet, dass** die ersten und zweiten Aktoren (1, 2) jeweils zurückgezogen werden ihren ersten stabilen Zustand (ES1) und ihre Ruheposition (PR) durch Federn (19, 29).

6. Schleusensteuerungssystem nach einem der Ansprüche 1 bis 5, **dadurch gekennzeichnet, dass** die ersten und zweiten Aktoren elektrisch oder hydraulisch realisiert sind.

7. Parksperre für Kraftfahrzeuge mit Automatikgetriebe gekennzeichnet , dass es ein Steuerungssystem nach einem der Ansprüche 1 bis 6 umfasst.

8. Kraftfahrzeug mit Automatikgetriebe, **dadurch gekennzeichnet, dass** es eine Parksperre nach Anspruch 7 aufweist.

## Claims

1. A lock control system comprising a first actuator (1) moving between a first stable state (ES1) in which a lock system (3) is implemented, the first stable state (ES1) being a state which does not require of electrical or hydraulic energy to last over time, and a first disengaged position (ED) in which the lock system (3) is deactivated, and a second actuator (2) moving between a rest position (PR) in which the second actuator (2) does not interact with the first actuator (1), and an active position (PA) in which the second actuator (2) is constrained against the first actuator (1), the first actuator (1) comprising a first socket (15) for a head of the second actuator (21) which when this second actuator (2) is in the active position (PA) and its implementation is maintained blocks the first actuator (1) in the first disengaged position (ED), the first actuator (1) comprising a rod (10) between a head (11) for the actuation of the system of lock (3) and a cylinder (18) for moving the rod (10) and the head (11), **characterized in that** the first actuator (1) further comprises a second socket (16), shaped, together with the head of the second actuator (2), to interact with the latter so as to block the first actuator (1) in a second stable state (ES2) in which the lock system (3) is deactivated, the second state stable (ES2) being a state which does not require electrical or hydraulic energy to persist over time, the first and second sockets (15, 16) being in the form of two notches provided at two distinct heights of the rod (10).

2. Lock control system according to claim 1, **characterized in that** the first actuator (1) is in translational movement in a first direction.
(D1) between the first stable state (ES1) and the first disengaged position (ED).

3. Lock control system according to claim 1 or claim 2, **characterized in that** the second actuator (2) is in translational movement in a second direction (D2) between the rest position (PR) and the active position (PA).

4. Lock control system according to one of claims 1 to 3, **characterized in that** the second stable state (ES2) is reached by a stroke (C2) of the first actuator from the engaged position (ES1) longer than that required (C1) to reach the first disengaged position (ED).

5. Lock control system according to one of claims 1 to 4, **characterized in that** the first and second actuators (1, 2) are returned respectively in their first stable state (ES1) and their rest position (PR) by springs (19, 29).

6. Lock control system according to one of claims 1 to 5, **characterized in that** the first and second actuators are electrically or hydraulically operated.

7. Parking lock for motor vehicle with automatic transmission **characterized in that** it comprises a control system according to one of claims 1 to 6.

8. Motor vehicle with automatic gearbox **characterized in that** it comprises a parking lock according to claim 7.
